# EUROPEAN PATENT SPECIFICATION

(11) **EP 2 815 450 B1**
(45) Date of publication and mention of the grant of the patent: **27.09.2017**
(21) Application number: 13749408.4
(22) Date of filing: 06.02.2013
(51) Int. Cl.: H01M 10/054, H01M 10/0568, H01M 10/0569, H01M 6/16, H01M 4/13

(54) **ELECTROCHEMICAL MAGNESIUM CELL AND METHOD OF MAKING SAME**
ELEKTROCHEMISCHE MAGNESIUMZELLE UND VERFAHREN ZUR HERSTELLUNG DAVON
PILE ÉLECTROCHIMIQUE AU MAGNÉSIUM ET SON PROCÉDÉ DE FABRICATION

(30) Priority: 16.02.2012 US 201261599558 P
(43) Date of publication of application: 24.12.2014
(73) Proprietor: 3M Innovative Properties Company, St. Paul, MN 55133-3427 (US)
(72) Inventor: LAMANNA, William M., Saint Paul, Minnesota 55133-3427 (US); TRAN, Tuan T., Halifax, Nova Scotia B3H 4R2 (CA); OBROVAC, Mark N., Halifax, Nova Scotia B3H 4R2 (CA)
(74) Representative: Vossius & Partner Patentanwälte Rechtsanwälte mbB
(86) International application number: PCT/US2013/024805
(87) International publication number: WO 2013/122783

(56) References cited:
- JP-A- 2004 259 650
- JP-A- 2004 265 675
- JP-A- 2004 265 676
- JP-A- 2004 327 326
- US-A- 6 063 522
- US-A1- 2004 137 324
- US-A1- 2008 182 176
- US-A1- 2008 182 176
- US-A1- 2011 244 338
- ARTHUR TIMOTHY S ET AL: "Electrodeposited Bi, Sb and Bi1-xSbxalloys as anodes for Mg-ion batteries", ELECTROCHEMISTRY COMMUNICATIONS, vol. 16, no. 1, 20 December 2011 (2011-12-20), pages 103-106, XP028890569, ISSN: 1388-2481, DOI: 10.1016/J.ELECOM.2011.12.010

## Description

### Field

The present disclosure relates to primary and secondary electrochemical cells that include magnesium electrode materials and electrolytes for the same.

### Background

There has been a lot of interest in rechargeable electrochemical cells as a way of storing energy for use in portable or mobile devices such as, for example, cell phones, personal digital assistants, plug-in hybrid vehicles, or electric vehicles. Much of the recent work has been to develop lithium-ion electrochemical cells that have high storage capacities and that can be operated safely. Magnesium has been suggested as a potential anode material for rechargeable nonaqueous electrochemical cells due to its abundance, its high charge density, and its ability to transfer two electrons upon ionization.

Hideyuku et al. (JP 2004-265765) have designed a secondary battery that has a sulfur positive electrode and a negative electrode that contains at least one of magnesium metal, magnesium alloy, magnesium oxide, silicon, carbon, and transition metal sulfide as an active material. The battery has a non-aqueous electrolyte containing a magnesium salt such as magnesium [bis(trifluoromethanesulfonyl)imide]₂.

NuLi et al. (Electrochemical and Solid-state Letters, 8, (11) C166-C169 (2005)) and Shimamura et al. (Journal of Power Sources, 196, 1586-1588 (2011)) have both reported the deposition and dissolution of magnesium from an ionic liquid. NuLi has reported electrochemical magnesium deposition and dissolution on a silver substrate in the ionic liquid N-methyl-N-propylpiperidinium bis(trifluoromethanesulfonylimide) containing 1M Mg[(CF₃SO₂)₂N]₂. Shimamura has reported electrochemical reduction and oxidation of magnesium cation in ionic liquids containing simple magnesium salts. The ionic liquid that they used was N,N-diethyl-N-methyl-(2-methoxyethyl) ammonium bis(trifluoromethanesulfonyl)imide.

JP 2004-265676 A relates to a specific non-aqueous electrolyte battery. Timothy S. Arthur et al. (Electrochemistry Communications; Volume 16, Issue 1, March 2012, Pages 103 -106) discloses electrodeposited Bi, Sb and Bi₁₋ₓSbₓ alloys as anodes for Mg-ion batteries.

US 2008/182176 A1 relates to a specific rechargeable magnesium battery.

### Summary

One of the challenges for the development of magnesium electrochemical cells and batteries is that of finding useful electrolytes. Magnesium analogues of common electrolyte salts (e.g. Mg(PF₆)₂, Mg(ClO₄)₂, Mg(SO₃CF₃)₂) generally have low solubility in electrolyte solvents. Furthermore, common electrolyte solvents are generally believed to form a blocking solid electrolyte interface (SEI) layer at low voltages that can increase internal impedance, reduce the charge rates, and impede electrochemical reactions essential to the efficient operation of magnesium electrochemical cells.

Nonaqueous magnesium electrolytes in which magnesium electrochemistry can be conducted at low overpotentials are typically solutions that contain Grignard reagents. Such solutions typically are composed of a solution of magnesium alkyl halide in tetrahydrofuran. Such solutions are toxic and react spontaneously with oxygen in the air, making them not compatible with dry room environments. They also are oxidatively unstable, limiting the voltage of magnesium batteries to below about 2.5 V.

Provided are concentrated magnesium electrolyte solutions that can be made with magnesium [bis(trifluoromethanesulfonyl)imide]₂, or Mg(TFSI)₂ salts in common oxidatively stable organic solvents (acetonitrile, carbonates, pyridine). In such solutions magnesium metal can be stripped at low overpotentials. Efficient magnesium intercalation at voltages of 0.5 V or greater can be achieved only when acetonitrile or adiponitrile is used as the solvent. Since acetonitrile and adiponitrile are much more oxidatively stable than THF or the Grignard reagents currently used, electrolytes made from Mg(TFSI)₂ and acetonitrile or adiponitrile may be highly useful as electrolytes for high voltage magnesium batteries. The utility of this electrolyte in primary cells has been demonstrated using a Mg metal anode and a Mo₆S₈ cathode. Electrochemical reversibility of Mg(TFSI)₂ electrolytes has also been observed, demonstrating usefulness in high voltage magnesium secondary cells.

In one aspect, an electrochemical cell is provided comprising:
at least one electrode comprising a magnesium intercalation compound, wherein the magnesium intercalation compound comprises a magnesium molybdenum sulfide having a chevrel phase; and
an electrolyte comprising a fluorinated imide salt substantially dissolved in an oxidatively stable solvent, wherein the fluorinated imide salt comprises magnesium [bis(trifluoromethanesulfonyl)imide]₂ and the oxidatively stable solvent comprises at least one of acetonitrile or adiponitrile. In addition, herein disclosed is that the at least one electrode can include a magnesium intercalation compound selected from transition metal sulfides, transition metal oxides, magnesium transition metal sulfides, magnesium transition metal oxides, and carbon fluorides. The provided electrochemical cell can include a negative electrode comprising magnesium. The provided electrochemical cell can be a primary (or non-rechargeable) electrochemical cell or a secondary (or rechargeable) electrochemical cell. In some embodiments, the provided electrochemical cell can be operated at temperatures greater than about 40°C and/or at voltages at or above 3.0V vs. Li/Li⁻.

In another aspect, a method of making an electrochemical cell is provided comprising:
dissolving a fluorinated imide salt in an oxidatively stable solvent to form an electrolyte, wherein the fluorinated imide salt comprises magnesium [bis(trifluoromethanesulfonyl)imide]₂ and the oxidatively stable solvent comprises at least one of acetonitrile or adiponitrile,
immersing at least one electrode that comprises a magnesium intercalation compound, wherein the magnesium intercalation compound comprises a magnesium molybdenum sulfide having a chevrel phase, into the electrolyte; and
immersing a second electrode comprising magnesium into the electrolyte.

In addition, herein disclosed is that the at least one electrode can be selected from transition metal sulfides, transition metal oxides, magnesium transition metal sulfides, magnesium transition metal oxides, and carbon fluorides.

Further, herein disclosed is a magnesium electrochemical cell that includes a liquid organic electrolyte, wherein the electrochemical cell is operated at a temperature greater than 40°C. In this disclosure:
"active" or "electrochemically active" refers to a material that can undergo magnesiation and demagnesiation by reaction with magnesium;
"chevrel" refers to chalcogenides that include molybdenum sulfides, selenides and tellurides that have structures that can intercalate magnesium;
"inactive" or "electrochemical inactive" refers to a material that does not react with magnesium and does not undergo magnesiation or demagnesiation;
"magnesiation" or "demagnesiation" refer to the processes of reactively inserting magnesium into an active material such as a magnesium intercalation compound or removing magnesium from an active material such as a magnesium intercalation material respectively;
"intercalation" refers to a processes in which magnesium can be reversibly inserted into and removed from a magnesium intercalation compound without substantially changing the crystal structure of the magnesium intercalation host compound;
"negative electrode" refers to an electrode (often called an anode) where electrochemical oxidation and demagnesiation occurs during a discharging process; and
"positive electrode" refers to an electrode (often called a cathode) where electrochemical reduction and magnesiation occurs during a discharging process.

The provided electrochemical cells and methods of making the same provide an electrolyte salt that has high solubility in nitrile-containing solvents. Furthermore, the provided electrochemical cells and methods resist the formation of a blocking solid electrolyte interphase layer that can impede electrochemical reactions essential to the efficient operation of magnesium electrochemical cells.

The above summary is not intended to describe each disclosed embodiment of every implementation of the present invention. The brief description of the drawings and the detailed description which follows more particularly exemplify illustrative embodiments.

### Brief Description of the Drawings

Fig. 1 shows the voltage curve of the Mo₆S₈ vs. Mg coin cell of Example 1.
Fig. 2 shows the x-ray diffraction pattern of the discharged Mo₆S₈ electrode of Example 1.
Fig. 3 shows the voltage curve of the Mo₆S₈ vs. Mg coin cell of Example 2.
Fig. 4 shows the x-ray diffraction pattern of the discharged Mo₆S₈ electrode of Example 1.
Fig. 5 shows the voltage curve of the Mo₆S₈ vs. Mg coin cell with Mg wire reference electrode of Example 4.
Fig. 6 shows the voltage curve of the Mo₆S₈ vs. discharged Mo₆S₈ coin cell of Example 5.
Fig. 7 shows the voltage curve of the Mo₆S₈ vs. Mg coin cell of Example 6.
Fig. 8 shows the cyclic voltammagram of the cell described in Example 7.

### Detailed Description

In the following description, reference is made to the accompanying set of drawings that form a part of the description hereof and in which are shown by way of illustration several specific embodiments. It is to be understood that other embodiments are contemplated and may be made without departing from the scope of the claims. The following detailed description, therefore, is not to be taken in a limiting sense.
The use of numerical ranges by endpoints includes all numbers within that range (e.g. 1 to 5 includes 1, 1.5, 2, 2.75, 3, 3.80, 4, and 5) and any range within that range.
Electrochemical cells according to claim 1 are provided that include at least one electrode that includes a magnesium intercalation compound and an electrolyte that includes a fluorinated imide salt that is substantially dissolved in an oxidatively stable solvent. In addition, herein disclosed are electrochemical cells that include at least one electrode that includes a magnesium intercalation compound and an electrolyte that includes a fluorinated methide salt that is substantially dissolved in an oxidatively stable solvent. A number of materials are known to intercalate magnesium. According to the invention, the magnesium intercalation compound comprises a magnesium molybdenium sulfide having a chevrel phase. In addition, exemplary materials are herein disclosed which include TiS₂, V₆O₁₃, V₂O₅, WO₃, MoO₃, MnO₂, InSe, and some sulfides of molybdenum. These materials are discussed, for example, in P. G. Bruce et al., "Chemical Intercalation of Magnesium into Solid Hosts", J. Mater. Chem., 1(4), 705-706 (1991) and Z. D. Kovalyuk et al, "Electrical Properties of Magnesium-Intercalated InSe", Inorganic Material, 45(8), 846-850 (2009). Another set of materials that can intercalate magnesium are the chevrel phase materials of molybdenum sulfide, selenide, and telluride. For example, MgₓMo₃S₄ intercalation cathodes have been disclosed in an article by D. Aurbach et al., Nature, 407, 724 (2000) and in U. S. Pat. Appl. Publ. No. 2004/0137324 (Itaya et al.). Magnesium chevrel phases can have various stoichiometries such as MgMo₃S₄ or Mg₂Mo₆S₈. Since magnesium intercalates into the chevrel materials, the amount of magnesium can vary depending upon the amount of intercalation. Other intercalation electrode materials that may be useful are described in International PCT Pat. App. Publ. No. WO2011/150093 (Doe et al.).

The provided electrochemical cells may include a current collector comprising one or more elements selected from the group consisting of carbon, Al, Cu, Ti, Ni, stainless steel, and alloys thereof, as described in U. S. Pat. App. Publ. No. 2011/0159381 (Doe et al.).

The electrochemical cells according to the invention and disclosed herein include an electrolyte that includes a fluorinated imide salt or a fluorinated methide salt substantially dissolved in an oxidatively stable solvent. The fluorinated imide or fluorinated methide salts include a bis(trifluoromethylsulfonyl)imide anion or a bis(trifluoromethylsulfonyl)methide anion having the formulae: 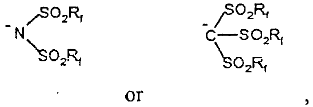 wherein each R_{f} group is, independently, F or a fluoroalkyl group having 1-4 carbon atoms, which may optionally contain catenary oxygen or nitrogen atoms within the carbon chain, and wherein any two adjacent R_{f} groups may optionally be liked to form a 5-7 membered ring. The salts can have cations selected from ammonium, imidazolium, pyrazolium, triazolium, thiazolium, oxazolium, pyridinium, pyridazinium, pyrimidonium, and pyrazinium. In some embodiments, the cations can be metals such as sodium, lithium, potassium, or magnesium. Generally, at least some of the cations are magnesium cations. Typically, magnesium [bis(trifluoromethanesulfonyl)imide]₂ or magnesium [tris(trifluoromethanesulfonyl)methide]₂ are employed in the provided electrolytes. Magnesium [bis(trifluorornethanesulfonyl)imide]₂ can be produced by reacting magnesium carbonate or magnesium hydroxide or magnesium metal with bis-(trifluoromethanesulfonyl)imide acid. Magnesium [tris(trifluoromethanesulfonyl)methide]₂ can be produced in an analogous manner from tris-(trifluoromethanesulfonyl)methide acid.

Fluorinated imide or methide salts such as, for example, magnesium [bis(trifluoromethylsulfonyl)imide]₂ (Mg(TFSI)₂) or magnesium [tris(trifluoromethylsulfonyl)methide]₂ (Mg(TFSM)₂), can be dissolved in oxidatively stable solvents such as organic carbonates, nitriles, and pyridine solvent systems. The disclosed Mg(TFSI)₂ or Mg(TFSM)₂ electrolyte salts can provide a number of surprising benefits when used in primary or secondary Mg cells. These salts can be both highly soluble and highly dissociated in oxidatively and reductively stable, nonaqueous organic solvents, including but not limited to, organic carbonates, nitriles, and pyridines. In some embodiments, the oxidatively stable organic solvents can include aliphatic nitriles such as acetonitrile, propionitrile, valeronitrile, isobutylnitrile, isopentylnitrile, t-butylnitrile, and dinitriles such as succinonitrile, malononitrile, or adiponitrile.

High concentrations of electrolyte salt possessing high dissociation constants in organic solvents can be highly desirable for achieving high ionic conductivity in the electrolyte and to support high rate charge and discharge performance in Mg cells. With Mg(TFSI)₂, electrolyte salt, concentrations up to 1.0 M (molar) or higher are possible, depending on the choice of solvents. For example, Mg(TFSI)₂ can be dissolved in acetonitrile to form solutions having a concentration of at least 0.1M, at least 0.5M, or even at least 1.0 M at room temperature. The solubility of Mg(TFSI)₂ can be even greater at elevated temperatures such as at temperatures greater than about 40°C. Solvents such as organic carbonates, nitriles, and pyridines provide a wide electrochemical stability window and thus enable production of high voltage Mg batteries. Acetonitrile has been found to be a particularly useful solvent because it is capable of supporting reversible Mg electrochemistry at relatively low overpotentials. Another advantage of Mg(TFSI)₂ is that it is chemically stable to air and moisture, unlike certain background art electrolytes, like Grignard reagents, which are extremely difficult to handle due to their air and moisture sensitivity and their pyrophoric nature. Furthermore, whereas Grignard reagents are oxidatively unstable and therefore limit overall cell potentials for Mg batteries, Mg(TFSI)₂ is much more stable to oxidation and thereby enables production of high voltage Mg batteries.

The thermally stable nature of electrolytes that include Mg(TFSI)₂ or Mg(TFSM)₂ and solvents such as organic carbonates, nitriles, and pyridine enables batteries comprising these electrolytes to be operated a elevated temperature. For example, batteries comprising these electrolytes can be operated at temperatures above 30°C, or above 40°C, or above 50°C or above 60°C, or even higher. The limiting temperature factor can be the boiling point of the most volatile solvent in the electrolyte solution.

Objects and advantages of this invention are further illustrated by the following examples, but the particular materials and amounts thereof recited in these examples, as well as other conditions and details, should not be construed to unduly limit this invention.

### Examples

### Preparation of magnesium [bis-(trifluoromethanesulfonyl)imide]₂ (Mg(TFSI)₂)

High purity Mg chips (99.98% from Aesar, 9.350g) and 150 g of deionized water (18 MOhm) were charged to a 1.0 L flask equipped with a condenser, nitrogen line, Claisen adapter and an addition funnel. A 55.5 weight percent (wt%) solution of H-N(SO₂CF₃)₂ in water (360.36 g, prepared according to PCT Pat. Appl. Publ. No. WO 97/23448, Example #12) was added dropwise with magnetic stirring at room temperature causing a mild exotherm and moderate gas evolution. After all of the imide acid solution was added, the reactor was equipped with a thermocouple probe and a heating mantle and the reaction solution was heated to 90°C with stirring for two hours. After 2 hours, the pH of the reaction solution was 8.0 (according to pH stick) indicating that the reaction of the imide acid with excess Mg was complete. After the reaction solution was cooled to room temperature, it was filtered by suction through a 0.2 micron filter membrane to remove insoluble magnesium fines to yield 530.2 g of clear colorless aqueous filtrate (pH = 8.0). The recovered filtrate was concentrated by short path distillation at atmospheric pressure to a final weight of 321.57 g and the concentrate was filtered again by suction through a 0.2 micron filter membrane to remove a small amount of insoluble solids. The filtered concentrate was transferred to a Pyrex crystallizing dish and evaporated to near dryness at 145°C in a convection oven and then dried more completely in a vacuum oven at the same temperature. Once dry, the fused white solid was chipped out of the crystallizing dish and transferred to a mortar and pestle where it was ground to a fine powder and immediately transferred to a glass canning jar for further vacuum drying overnight at 145°C to a final pressure of 45 mTorr. The product was allowed to cool to room temperature in vacuo and then vented with dry nitrogen, immediately capped and transferred to a nitrogen-filled drybox for storage. The isolated yield of anhydrous Mg(TFSI)₂ product was 165.2g (79.5% of theory). Analysis of the product by quantitative ¹H and ¹⁹F NMR spectroscopy indicated that it was of high purity, containing 99.902% by wt. Mg[(N(SO₂CF₃)₂]₂. Water levels measured by Karl-Fischer analysis were 34 ppm and chloride ion levels measured by ion chromatography were < 3ppm. Levels of common metal ion impurities (24 element scan) were determined by ICP-MS and all metallic impurities were found to be present at less than 3 ppm in the product.

### Mo₆S₈ Electrode Preparation

Chevrel phase Mo₆S₈ was prepared by chemical extraction of Cu from Cu₂Mo₆S₈. 5.0839 g of Cu powder (Alfa Aesar, -325 mesh, 10% max +325 mesh, 99% metals basis), 7.7136 g Mo powder (Sigma Aldrich, 1-2 µm, ≥99.9%, trace metals basis) and 25.6209 g of MoS₂ powder (Alfa Aesar, -325 mesh, 99% metals basis) were blended together by hand and placed in an alumina boat. The powder mixture was then heated under vacuum at 150°C for 12 hours, ramped to 985°C at a rate of 500°C/hr and held at 985°C for 150 hours. The sample was then cooled to room temperature over 12 hours under vacuum. X-ray diffraction measurement showed that the product was Cu₂Mo₆S₈.

About 10 g of Cu₂Mo₆S₈ were placed in a 100 ml round bottom flask. A 6M HCl was prepared by diluting concentrated HCl (ACP, A.C.S Reagent). About 80 ml of the 6M HCl solution were added to the round bottom flask. The powder / HCl slurry was stirred for 18 hours while oxygen was bubbled through the slurry. The slurry was then filtered through a Buchner funnel and washed with 6M HCl until the filtrate became colorless. The washed powder was dried 120°C in air for two hours. X-ray diffraction measurements of this powder showed that it was the Chevrel phase of Mo₆S₈.

3.2 g Mo₆S₈ powder, 0.4 g of Super P carbon black (MMM Carbon, Belgium), 0.4 g PVDF (Kynar, HSV900) and 10 g N-methylpyrrolidone (Sigma Aldrich, 99.5% anhydrous) were added to a 50 ml hardened steel grinding jar (Retsch) with two 1.25 mm tungsten carbide balls. The slurry was mixed at 120 rpm for one hour using a Retsch PM 200 planetary mill. The slurry was then coated onto aluminum foil using a doctor blade with a 0.008 inch (203.2 µm) gap. The coating was dried at 120°C for one hour in air prior to use. Electrode disks 12.95 mm in diameter were punched from the foil for use in coin cells. Each disk had approximately 5-6 mg of Mo₆S₈ active material.

### Electrolyte and Coin Cell Preparation

All electrolyte and coin cell preparation was performed in an argon glovebox with less than 0.1 ppm moisture and oxygen. Coin cells were constructed from 2325 coin cell hardware. Mg electrodes were prepared by punching 15.60 mm disks from 250 µm Mg foil (99.95%, GalliumSource LLC). Each cell contained a Mg foil electrode, CELGARD 2320 separator, electrolyte, a Mo₆S₈ disk electrode and a stainless steel spacer.

All electrolyte solvents were dried with molecular sieves (Sigma Aldrich, Type 3Å, bead 4-8 mesh), unless otherwise stated. Electrolytes were prepared by dissolving Mg(TFSI)₂ salt in either acetonitrile (Sigma Aldrich, ≥99.9%, for HPLC), pyridine (Sigma Aldrich, 99.8% anhydrous) and a 1:2 w/w solution of ethylene carbonate (EC) / diethyl carbonate (DEC) (EC/DEC solvent mixture used as received from Novolyte). All coin cells were electrochemically cycled at a rate of C/100 or C/50, based on 122 mAh/g for Mo₆S₈ using a Maccor Series 4000 Battery Test System. Cycling tests were performed in a thermostatically controlled chamber (±0.5°C) at either 30°C or 60°C. Dimethyl carbonate (DMC) was used as received from Novolyte for rinsing electrodes.

### Example 1

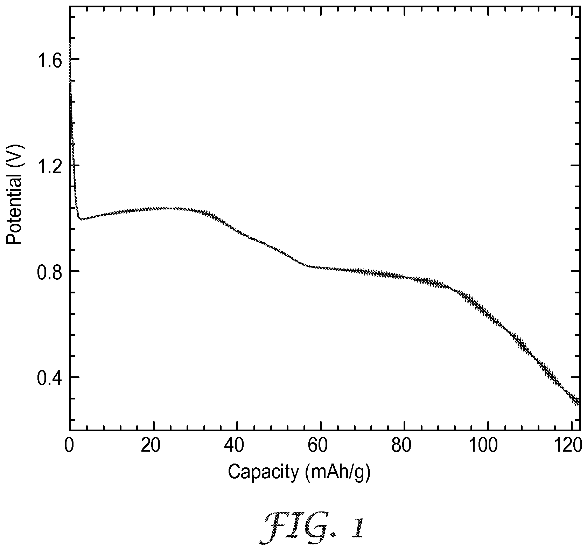

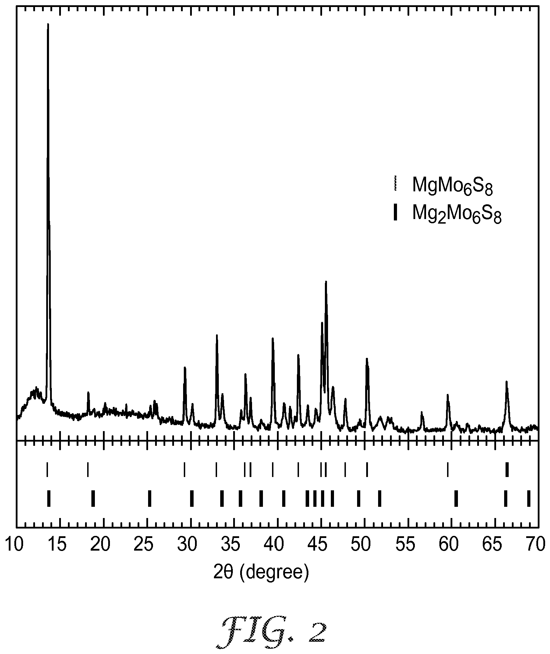

A Mo₆S₈vs. Mg coin cell was constructed using an electrolyte consisting of a 0.5 M solution of Mg(TFSI)₂ in acetonitrile. The cell was discharged at a rate of C/100 for 100 hours at 60°C. The voltage curve of the cell is shown in Fig. 1. The cell was then disassembled in an argon filled glovebox and the discharged Mo₆S₈ electrode powder was scraped off the current collector, rinsed with DMC, dried under vacuum and placed in a gas-tight x-ray sample holder with an aluminized MYLAR window. The x-ray diffraction pattern of this sample was measured while helium gas was flowed through the sample holder. The diffraction pattern (Fig. 2) shows that the discharged Mo₆S₈ electrode was primarily composed of Mg₂Mo₆S₈ with some MgMo₆S₈ present as a minority phase.

### Example 2 (Reference)

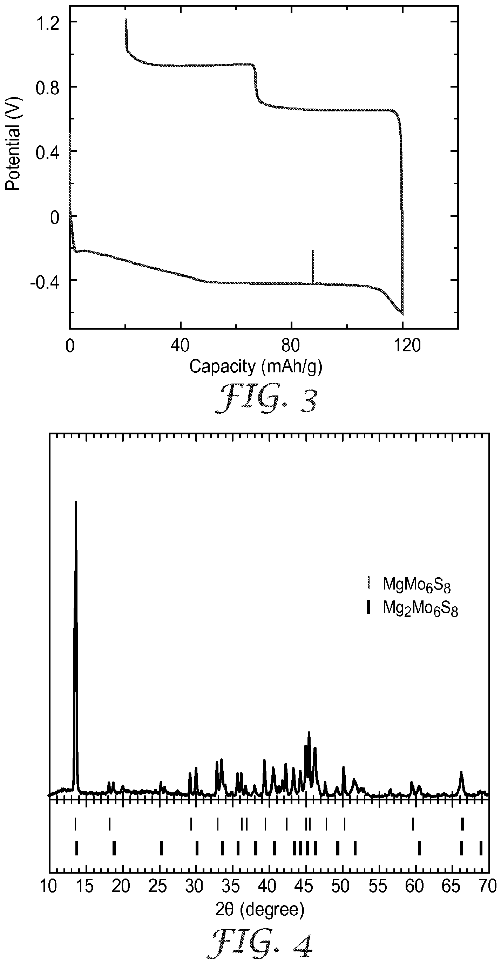

A Mo₆S₈ vs Mg coin cell was constructed using an electrolyte consisting of a 0.5 M solution of Mg(TFSI)₂ in pyridine. The cell was discharged and charged at a C/50 rate at 60°C between -0.6 V and 1.2 V and the voltage curve is shown in Figure 3. The negative voltage is likely due to polarization at the Mg metal electrode. A separate cell was fully discharged to -0.6 V, disassembled in an argon filled glovebox and the discharged Mo6S8 electrode powder was scraped off the current collector, rinsed with DMC, dried under vacuum and placed in a gas-tight x-ray sample holder with an aluminized mylar window. The x-ray diffraction pattern of this sample was measured while helium gas was flowed through the sample holder. The diffraction pattern (Figure 4) shows that the Mo₆S₈ electrode intercalated magnesium during the discharge to form Mg₂Mo₆S₈ and MgMo₆S₈.

### Example 3

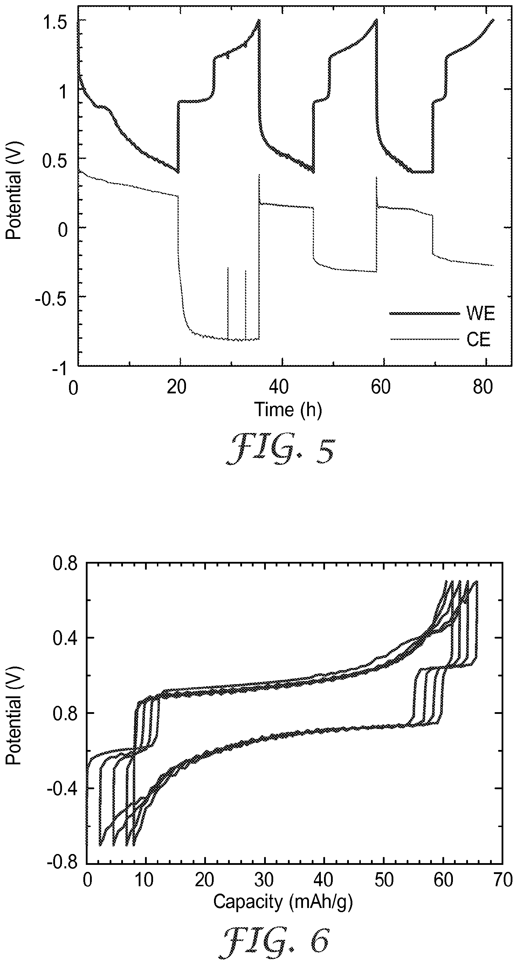

A Mo₆S₈ vs Mg coin cell was constructed as described in Example 1, except that a Mg wire reference electrode was placed between the Mo₆S₈ and Mg electrodes. The cell was cycled such that the voltage of the Mo₆S₈ vs Mg wire reference electrode was between 0.5 V and 1.5 V at 60°C and a C/50 rate. The voltage curve of this cell is shown in Figure 5, showing reversible cycling of the Mo₆S₈ electrode.

### Example 4

A symmetric Mo₆S₈ coin cell was constructed as follows. First a Mo₆S₈ vs Mg coin cell was constructed and discharged as described in Example 1. The cell was then disassembled in an argon-filled glovebox and the discharged Mo₆S₈ electrode was removed. A new coin cell was then prepared with an electrolyte consisting of a 0.5 M solution of Mg(TFSI)₂ in acetonitrile and one electrode being the discharged Mo₆S₈ electrode and the other electrode being a newly prepared Mo₆S₈ electrode. The cell was then cycled at a C/40 rate between +/- 0.7 V. The voltage curve of this cell is shown in Figure 6.

### Example 5

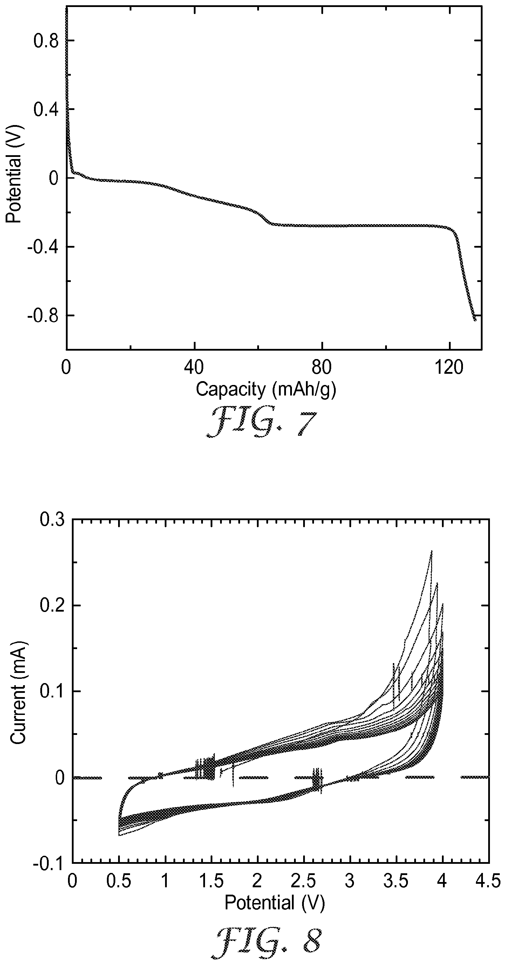

A Mo₆S₈ vs Mg coin cell was constructed as described in Example 1, except a solution of 0.5 M Mg(TFSI)₂ in adiponitrile was used as the electrolyte. The cell was discharged to -0.8 volts, after which the Mo₆S₈ electrode reached its full theoretical capacity. The voltage curve of this cell is shown in Figure 7. The negative voltage is likely due to polarization at the Mg metal electrode.

### Example 6

A three electrode cell with Mg foil reference and counter electrodes and a 4 mm diameter glassy carbon rod working electrode was constructed in a 20 ml glass vial and covered with a rubber stopper with holes for electrical feedthroughs. Enough electrolyte comprising a 0.5 M solution of Mg(TFSI)₂ in acetonitrile was added to the vial to cover the electrode surfaces. Cyclic voltammetry was conducted with this cell at a scan rate of 20 mV/s between 0.5 V and 4 V vs Mg at 25°C. The cyclic voltammagrams obtained are shown in Figure 8. The electrolyte showed stability towards oxidative decomposition at voltages up to about 3.2 V vs Mg.

### Comparative Example 1

A Mo₆S₈ vs. Mg coin cell was constructed using an electrolyte consisting of a 0.5 M solution of Mg(TFSI)₂ in 1:2 w/w EC:DEC. The cell was discharged at a C/100 rate at 60°C to zero volts and showed almost no capacity.

Various modifications and alterations to this invention will become apparent to those skilled in the art without departing from the scope of the claims. It should be understood that this invention is not intended to be unduly limited by the illustrative embodiments and examples set forth herein and that such examples and embodiments are presented by way of example only with the scope of the invention intended to be limited only by the claims set forth herein as follows.

## Claims

1. An electrochemical cell comprising:
at least one electrode comprising a magnesium intercalation compound, and
an electrolyte comprising a fluorinated imide salt substantially dissolved in an oxidatively stable solvent, wherein the fluorinated imide salt comprises magnesium [bis(trifluoromethanesulfonyl)imide]₂ and the oxidatively stable solvent comprises at least one of acetonitrile or adiponitrile,
**characterized in that** the magnesium intercalation compound comprises a magnesium molybdenum sulfide having a chevrel phase.

2. An electrochemical cell according to claim 1, further comprising a negative electrode comprising magnesium.

3. An electrochemical cell according to claim 2, wherein the negative electrode comprises magnesium metal.

4. An electrochemical cell according to claim 1, wherein the cell is a primary electrochemical cell.

5. An electrochemical cell according to claim 1, wherein the cell is a secondary eletrochemical cell.

6. A method of making an electrochemical cell comprising:
dissolving a fluorinated imide salt in an oxidatively stable solvent to form an electrolyte, wherein the fluorinated imide salt comprises magnesium [bis(trifluoromethanesulfonyl)imide]₂ and the oxidatively stable solvent comprises at least one of acetonitrile or adiponitrile,
immersing at least one electrode that comprises a magnesium intercalation compound, wherein the magnesium intercalation compound comprises a magnesium molybdenum sulfide having a chevrel phase, into the electrolyte; and
immersing a second electrode comprising magnesium into the electrolyte.

## Patentansprüche

1. Elektrochemische Zelle, umfassend:
mindestens eine Elektrode, die eine Magnesium-Interkalationsverbindung umfasst,
und
einen Elektrolyten, umfassend ein fluoriertes Imidsalz, das im Wesentlichen in einem oxidativ stabilen Lösungsmittel gelöst ist, wobei das fluorierte Imidsalz Magnesium[bis(trifluormethansulfonyl)imid]₂ umfasst, und das oxidativ stabile Lösungsmittel mindestens eines von Acetonitril oder Adiponitril umfasst,
**dadurch gekennzeichnet, dass** die Magnesium-Interkalationsverbindung ein Magnesium-Molybdän-Sulfid umfasst, das eine Chevrel-Phase aufweist.

2. Elektrochemische Zelle nach Anspruch 1, ferner umfassend eine negative Elektrode, die Magnesium umfasst.

3. Elektrochemische Zelle nach Anspruch 2, wobei die negative Elektrode Magnesiummetall umfasst.

4. Elektrochemische Zelle nach Anspruch 1, wobei es sich bei der Zelle um eine elektrochemische Primärzelle handelt.

5. Elektrochemische Zelle nach Anspruch 1, wobei es sich bei der Zelle um eine elektrochemische Sekundärzelle handelt.

6. Verfahren zum Herstellen einer elektrochemischen Zelle, umfassend:
Lösen eines fluorierten Imidsalzes in einem oxidativ stabilen Lösungsmittel, um einen Elektrolyten zu bilden, wobei das fluorierte Imidsalz Magnesium[bis(trifluormethansulfonyl)imid]₂ umfasst, und das oxidativ stabile Lösungsmittel mindestens eines von Acetonitril oder Adiponitril umfasst,
Eintauchen mindestens einer Elektrode, die eine Magnesium-Interkalationsverbindung umfasst, wobei die Magnesium-Interkalationsverbindung ein Magnesium-Molybdän-Sulfid mit einer Chevrel-Phase umfasst, in den Elektrolyten; und
Eintauchen einer zweiten Elektrode, die Magnesium umfasst, in den Elektrolyten.

## Revendications

1. Pile électrochimique comprenant :
au moins une électrode comprenant un composé d'intercalation de magnésium,
et
un électrolyte comprenant un sel d'imine fluoré sensiblement dissous dans un solvant stable à l'oxydation, dans lequel le sel d'imine fluoré comprend du magnésium [bis(trifluorométhanesulfonyl)imide]₂ et le solvant stable à l'oxydation comprend au moins un composant parmi l'acétonitrile ou l'adiponitrile,
**caractérisé en ce que** le composé d'intercalation de magnésium comprend un sulfure de magnésium et de molybdène comportant une phase de Chevrel.

2. Pile électrochimique selon la revendication 1, comprenant en outre une électrode négative comprenant du magnésium.

3. Pile électrochimique selon la revendication 2, dans laquelle l'électrode négative comprend du magnésium métallique.

4. Pile électrochimique selon la revendication 1, dans laquelle la pile est une pile électrochimique primaire.

5. Pile électrochimique selon la revendication 1, dans laquelle la pile est une pile électrochimique secondaire.

6. Procédé de fabrication d'une pile électrochimique comprenant les étapes consistant à :
dissoudre un sel d'imine fluoré dans un solvant stable à l'oxydation pour former un électrolyte, dans lequel le sel d'imine fluoré comprend du magnésium [bis(trifluorométhanesulfonyl)imide]₂ et le solvant stable à l'oxydation comprend de l'acétonitrile et/ou de l'adiponitrile,
immerger au moins une électrode qui comprend un composé d'intercalation de magnésium, où le composé d'intercalation de magnésium comprend un sulfure de magnésium et de molybdène ayant une phase de Chevrel dans l'électrolyte ; et
immerger dans l'électrolyte une deuxième électrode comprenant du magnésium.
